# EUROPÄISCHE PATENTSCHRIFT

(11) **EP 3 629 108 B1**
(45) Veröffentlichungstag und Bekanntmachung des Hinweises auf die Patenterteilung: **24.08.2022**
(21) Anmeldenummer: 18197513.7
(22) Anmeldetag: 28.09.2018
(51) Int. Cl.: G05B 19/042

(54) **PROJEKTIERUNG EINES AUTOMATISIERUNGSSYSTEMS**
PLANNING OF AN AUTOMATION SYSTEM
CONCEPTION D'UN SYSTÈME D'AUTOMATISATION

(43) Veröffentlichungstag der Anmeldung: 01.04.2020
(73) Patentinhaber: Siemens Aktiengesellschaft, 80333 München (DE)
(72) Erfinder: Menzel, Thomas, 91094 Langensendelbach OT Bräuningshof (DE); Thomas, Michael, 90768 Fürth (DE)

(56) Entgegenhaltungen:
- DE-A1-102015 221 650
- US-A1- 2013 211 546
- REINHARD LANGMANN ET AL: "Industrial Cloud: Status and Outlook", HMD. PRAXIS DER WIRTSCHAFTSINFORMATIK, Bd. 52, Nr. 5, 14. Juli 2015 (2015-07-14), Seiten 647-664, XP055335972, DE ISSN: 1436-3011, DOI: 10.1365/s40702-015-0162-0

## Beschreibung

### Die Erfindung betrifft ein Verfahren zur Projektierung eines Automatisierungssystems sowie ein Engineeringsystem zur Projektierung eines Automatisierungssystems

Im industriellen Umfeld und insbesondere im Maschinenbau besteht zunehmend der Bedarf, Applikationen in einer sogenannten Cloud oder auf sogenannten Edge-Geräten, welche eine Schnittstelle zwischen Anlagenkomponenten und einer Cloud bilden, zu nutzen. Dabei wird innerhalb der Cloud oder zumindest teilweise in der Cloud und auf Edge-Geräten eine Analyse oder ein Monitoring oder eine Beobachtung eines Zustandes einer Anlagenkomponente, insbesondere eines Maschinenzustandes, anhand technischer oder betriebszustandsbedingter Informationen vorgenommen. Die Analyse oder eine Auswertung, welche in der Cloud oder auf dem Edge-Gerät vorgenommen wird, lässt dabei beispielsweise Voraussagen über die Haltbarkeit von Anlagenteilen oder über auftretende Betriebsstörungen zu und vereinfacht insbesondere eine Überwachung oder Instandhaltung komplexer Anlagen. Dabei wird beispielsweise eine Überwachung einer Maschine vereinfacht. In der Folge kann insbesondere eine Steigerung einer Verfügbarkeit einer industriellen Anlage oder eine Steigerung einer Produktivität einer Maschine erzielt werden.

Maschinenanwender oder Maschinenbauer können sogenannte Applikationen in der Cloud oder auf dem Edge-Gerät nutzen. Solche Applikationen reichen von Programmen, bei welchen ein einfaches Anzeigen von Betriebszuständen erfolgt bis hin zur Verwendung komplexer, beispielsweise auf künstlicher Intelligenz basierender Methoden. Dabei gilt in der Regel, dass insbesondere höherwertige Applikationen spezifisch für eine Branche in der Industrieautomatisierung zu entwickeln sind. Beispielsweise sind spezifisch für eine Branche des Maschinenbaus zugeschnittene Applikationen von Interesse, welche auf Maschinentypen oder Produktionsprozesse oder einzelne Maschinenelemente eines Maschinenbauunternehmens eingehen. Insbesondere liegt ein mechatronisches oder maschinenbauliches oder prozesstechnisches Know-How, welches für eine für einen Nutzer zugeschnittene Applikation notwendig ist, bei einem Maschinenbauunternehmen oder OEM selbst und soll insbesondere überdies als Bestandteil dessen intellektuellen Eigentums nicht herausgegeben werden. Somit besteht die Notwendigkeit, die Generierung oder Entwicklung oder Anpassung von Applikationen oder Apps unter Einbeziehung des Know-Hows oder der Kenntnisse eines Maschinenbauunternehmens oder OEMs eines Automatisierungssystems oder mit der Mitwirkung von Projektierern oder Anwendungsprogrammierern des Automatisierungssystems zu ermöglichen.

Verbreitet ist die Erstellung von Applikationen durch Anbieter von Automatisierungslösungen oder Cloud-Systemen. Ebenso bedient sich ein Nutzer eines Automatisierungssystems oftmals horizontaler oder branchenunspezifischer IT-Anbieter, z.B. aus dem Office-IT-Umfeld, welchen branchen-, maschinen- oder prozessspezifisches Know-How weitergegeben werden muss, um darauf zugeschnittene Applikationen entwickeln zu können.

Die Offenlegungsschrift US2013/0211546A1 zeigt ein Cloudfähiges Gerät, das eine automatische Konfiguration und Integration in ein Automatisierungssystem ermöglicht. Dazu werden eine geographische Lage des Geräts, andere Geräte im System und die eigene Rolle im System bestimmt. Das Gerät baut dann eine Kommunikation mit einer Cloud-Platform auf und sendet ein Geräteprofil. Das Geräteprofil kann genutzt werden, um das Gerät automatisch für den Betrieb im System zu konfigurieren oder das Gerät einer Cloud-basierten Anwendung hinzuzufügen. Die Offenlegungsschrift DE 10 2015 221 650 A1 zeigt eine Steuerungseinrichtung zum Betreiben eines Automatisierungsgerätes aufweisend einen logischen Steuerungsprogrammteil (Steuerungsprogramm) und einen Programmteil für die Konfiguration der Ein-/Ausgabegeräte (Gerätekonfiguration) sowie einer mit einem Netzwerk verbundenen Runtime-Maschine, bei der Steuerungsprogramm und Gerätekonfiguration zur Laufzeit in der Runtime-Maschine ausgeführt werden. Das Steuerungsprogramm, die Runtime-Maschine, ein Ein-/Ausgabe-Router und eine Ein-/Ausgabe-Konfigurationsdatei sind als separate Module in einer Cloud gespeichert, die Runtime-Maschine mit dem Steuerungsprogramm (SP) wird in einen ersten Rechner am Netzwerk und der Ein-/Ausgabe-Router mit der Ein-/Ausgabe-Konfigurationsdatei wird in einen zweiten Rechner am Netzwerk geladen und dort ausgeführt.

Der Artikel "Industrial Cloud - Status und Ausblick" von Reinhard Langmann und Michael Stiller, erschienen in HMD Praxis der Wirtschaftsinformatik, Bd. 52, Nr. 5, 14. Juli 2015, Seiten 647-664 zeigt einen Überblick über den aktuellen Stand beim Einsatz und der Entwicklung des Cloud Computing für die Produktionsautomatisierung (Industrial Cloud). Ein besonderer Schwerpunkt des Beitrags sind dabei Anwendungen und Projekte, die sich mit der Verlagerung von Automatisierungsfunktionen aus der Prozessleit- und Steuerungsebene als Cloud-Dienste in eine Industrial Cloud beschäftigen.

Vor diesem Hintergrund besteht eine Aufgabe der vorliegenden Erfindung darin, eine Projektierung eines Automatisierungssystems oder ein dafür vorgesehenes Engineeringsystem derart zu verbessern, dass eine Automatisierungsaufgabe unter Einbeziehung einer Cloud-Umgebung und/oder eines Edge-Gerätes durchgeführt werden kann.

Diese Aufgabe wird durch die Gegenstände der unabhängigen Ansprüche gelöst. Vorteilhafte Ausgestaltungen sind in den abhängigen Ansprüchen angegeben.

Die Erfindung betrifft ein Verfahren zur Projektierung eines Automatisierungssystems, aufweisend folgende Verfahrensschritte:
- Integrieren einer Cloud-Umgebung und/oder eines Edge-Gerätes mit Verbindungsmöglichkeit zu einer Cloud-Umgebung in eine Projektstruktur einer Projektierungsumgebung, wobei die Projektstruktur Komponenten aufweist und mindestens eine Hardwarekomponente mit Projektbestandteilen aufweist, wobei das Integrieren ein Hinterlegen und Anzeigen der Cloud-Umgebung oder des Edge-Gerätes als Komponenten strukturiert gemäß einer technologischen Hierarchie umfasst,
- Definieren von zur Cloud-Umgebung und/oder zum Edge-Gerät zugehörigen Projektbestandteilen,
   wobei zumindest ein Programmbaustein und eine Gerätekonfiguration für die Cloud-Umgebung oder das Edge-Gerät festgelegt werden, wobei die Hardware-Komponente und die Cloud-Umgebung und/oder das Edge-Gerät mittels der Projektierung zur Ausführung einer teilweise in der Cloud-Umgebung und/oder im Edge-Gerät durchzuführenden Automatisierungsaufgabe des Automatisierungssystems ausgebildet sind.

Unter einer Hardware-Komponente wird eine real in dem Automatisierungssystem verbaute Komponente verstanden, insbesondere eine Steuerung für das Automatisierungssystem. Ebenso kann unter der Hardware-Komponente beispielsweise ein Antrieb verstanden werden. Insbesondere bei mehreren Hardware-Komponenten ist vorteilhafterweise als eine Komponente eine Steuerung vorgesehen, als eine weitere ein Antrieb und beispielsweise als eine weitere ein Motor.

Eine Hardware-Komponente ist mit den zugehörigen Projektbestandteilen in einer Projektstruktur innerhalb einer Projektierungsumgebung gelistet oder enthalten.

In der Projektierungsumgebung ist somit die mindestens eine Hardware-Komponente als Abstraktion oder Abbildung eines realen Gerätes integriert. Die Projektbestandteile der Hardware-Komponente sind zur Spezifizierung oder Kennzeichnung der Hardware-Komponente geeignet. Insbesondere sind über die Projektbestandteile Informationen zu der Hardware-Komponente hinterlegt, welche beispielsweise einerseits reale Eigenschaften der Hardware-Komponente betreffen und beispielsweise andererseits eine Software-Repräsentation der Hardware-Komponente betreffen.

Kennzeichnend für die Projektierungsumgebung ist auch eine technologische Hierarchie, welche sich innerhalb der Projektierungsumgebung abbilden lässt. Insbesondere ist eine Baumstruktur der Projektierungsumgebung graphisch aufbaubar oder generierbar und auch graphisch erkennbar.

Unter einer Cloud-Umgebung ist eine Rechenumgebung zu verstehen, welche auf der Kapazität eines Servers beruht, welcher selbst nicht zwingendermaßen Bestandteil des Automatisierungssystems ist. Beispielsweise handelt es sich um einen externen Server oder einen für mehrere Automatisierungssysteme gemeinsam vorgesehenen Server, der in einem der den Server gemeinsam nutzenden Systeme realisiert ist. Ist ein Automatisierungssystem mit einer Cloud-Umgebung verbunden, so werden Daten des Automatisierungssystems der Cloud-Umgebung zur Verfügung gestellt bzw. an diese übermittelt und eine Bearbeitung der Daten erfolgt ausgelagert innerhalb der Cloud-Umgebung. Unter einem Edge-Gerät wird ein mit dem Automatisierungssystem verbindbares Gerät bezeichnet, welches als Schnittstelle zu einer Cloud-Umgebung dient. Insbesondere findet auf dem Edge-Gerät eine Vorbearbeitung der an die Cloud-Umgebung zu übermittelnden Daten statt. Beispielsweise erfolgt auch eine Bearbeitung der Daten auf dem Edge-Gerät vorab, sodass weniger Rechenkapazität der Cloud-Umgebung in Anspruch genommen werden muss.

Die Cloud-Umgebung oder das Edge-Gerät werden somit in der Projektierungsumgebung in die Projektstruktur und deren technologische Hierarchie eingebunden. Dazu werden zur Cloud-Umgebung und/oder zum Edge-Gerät zugehörige Projektbestandteile definiert. Die Definition betrifft zumindest einen Programmbaustein und eine Gerätekonfiguration für die Cloud-Umgebung oder das Edge-Gerät. Somit werden die Cloud-Umgebung oder das Edge-Gerät mit zugehörigen Projektbestandteilen analog zur Integration der Hardware-Komponente mit deren Projektbestanteilen in die Projektstruktur integriert. Die Cloud-Umgebung oder das Edge-Gerät werden innerhalb der Projektierung wie ein Hardware-Gerät der Automatisierungsanlage behandelt. Durch die Projektierung wird das Durchführen einer Automatisierungsaufgabe des Automatisierungssystems ermöglicht, welche auf einer Hardware-Komponente und einer Cloud-Umgebung oder einer Hardware-Komponente und einem Edge-Gerät oder einer Hardware-Komponente, einem Edge-Gerät und einer Cloud-Umgebung ausgeführt werden. Zumindest teilweise erfolgt somit die durchzuführende Automatisierungsaufgabe in der Cloud oder auf dem Edge-Gerät. In der vorliegenden Anmeldung umfasst der Begriff Automatisierungsaufgabe somit einerseits die Kernautomatisierung, beispielsweise die lokal vorgesehene Automatisierung, umfassend PLC-Programme und die Wirkung von Sensorik und Aktorik, und ferner auch einen durch die Möglichkeiten der Cloud-Einbindung geschaffenen Value-Add als Teil der Automatisierungsaufgabe. Durch die anteilige Durchführung der Automatisierungsaufgabe in der Cloud wird die Kernautomatisierungsaufgabe ergänzt oder erweitert und eine gesamte Automatisierungsaufgabe im Sinne der Anmeldung vervollständigt.

Für das Einbeziehen der auf der Cloud oder dem Edge-Gerät durchzuführenden Automatisierungsschritte wird mittels des vorgeschlagenen Verfahrens die Projektierungsumgebung genutzt, indem die Projektstruktur um die außerhalb des Automatisierungssystems realisierte Komponente der Cloud-Umgebung analog zu einer Hardware-Komponente ergänzt wird. Alternativ wird im Falle eines vorgesehenen Edge-Gerätes die Projektstruktur um ein virtuelles Edge-Gerät unter Berücksichtigung der durch das Edge-Gerät realisierten Funktionen integriert.

Die Projektierung von Komponenten und deren Funktionalitäten, welche selbst nicht Bestandteil der herkömmlicherweise einzurichtenden oder zu projektierenden Automatisierungsumgebung sind, erfolgt gemäß dem vorgeschlagenen Verfahren vorteilhafterweise mit Mitteln der gängigen Projektierung innerhalb eines Automatisierungssystems. Insbesondere kann die Projektierung so analog zu derjenigen einer Hardware-Komponente, wie beispielsweise der Steuerung einer Automatisierungsanlage, erfolgen. Die Projektierung einer Hardware-Komponente innerhalb eines Automatisierungssystems gehört in der Regel zur Kernkompetenz eines Projektierers oder Anwendungsprogrammierers des Automatisierungssystems, beispielsweise eines Maschinenbauers. Seine Fähigkeiten, Kompetenzen und sein Know-How kann er auf vorteilhafte Weise auch für die Projektierung der Cloud-Umgebung oder des Edge-Gerätes verwenden, da deren Projektierung integriert in die Projektierung des Automatisierungssystems erfolgt. Somit kann auf vorteilhafte Weise das vorhandene Wissen oder Know-How von Endnutzern, Maschinenbauern oder OEMs aus der Steuerungstechnik eingesetzt werden, um Automatisierungsaufgaben in Verbindung mit Cloud-Lösungen selbst umzusetzen.

Gemäß einer Ausgestaltung wird mittels des mindestens einen Programmbausteins ein Betriebssystem für das Ausführen von Programmen oder Applikationen auf der Cloud-Umgebung und/oder dem Edge-Gerät oder eine Programmiersprache für das Programmieren von Programmen oder Applikationen für die Cloud-Umgebung und/oder das Edge-Gerät festgelegt. Der Programmbaustein gibt somit quasi die Software-Basis für die Generierung von Cloud- und Edge-Applikationen vor.

Gemäß einer Ausgestaltung wird als Programmiersprache für das Programmieren von Programmen oder Applikationen für die Cloud-Umgebung und/oder das Edge-Gerät eine Programmiersprache für Programme der Hardware-Komponente festgelegt. Auf besonders vorteilhafte Weise wird als Programmiersprache für das Programmieren der Programme oder Applikationen in der Cloud oder auf dem Edge-Gerät eine Programmiersprache festgelegt, mit welcher auch die mindestens eine Hardware-Komponente programmiert wird. Beispielsweise ist dies eine gängige Engineering-Software oder PLC-Sprache, beispielsweise SCL, kurz für Structured Control Language, ST, kurz für Structured Text oder OOP, kurz für Object Oriented Programming. Mittels des Programmbausteins kann ferner ein Betriebssystem für das Ausführen der Programme oder Applikationen auf der Cloud oder dem Edge-Gerät gewählt werden. Darüber hinaus kann auf vorteilhafte Weise die Anforderung an eine Kompilierung von innerhalb der Projektierungsumgebung erstellten Programmen oder Applikationen vorgegeben werden. Insbesondere wird ein Compiler oder Cross-Compiler eingesetzt, welcher eine verwendete PLC-Sprache in einen Maschinencode übersetzt, welcher von dem Edge-Gerät oder der Cloud-Umgebung interpretiert werden kann.

Gemäß einer Ausgestaltung wird als zugehöriger Programmbaustein ferner ein Bedieninterface festgelegt. Insbesondere für Automatisierungsprojekte mit einer Cloud-Umgebung ist das Bedieninterface vorteilhaft Projektbestandteil. Für die Cloud-Umgebung ist somit beispielsweise eine Nutzeroberfläche eines User Interfaces der Cloud projektierbar. Auch für Edge-Geräte kann ein Bedieninterface Projektbestandteil sein. In Anwendungsfällen kann jedoch ein Edge-Gerät auch ohne Nutzerschnittstelle, die über das Engineeringsystem oder die Projektierungsumgebung projektiert oder programmiert wird, ausgebildet sein.

Gemäß einer Ausgestaltung wird als Bedien-Interface ein Bedien-Interface-Designtool festgelegt, welches eine Bibliothek von Bedienelementen umfasst. Als Bedien-Interface ist auch ein sogenanntes User Interface oder kurz UI zu verstehen. Design-Tools für User Interfaces werden insbesondere auch UI-Architekten genannt. Durch das Festlegen eines solchen Bedien-Interface-Designtools kann in der Projektierungsumgebung des Automatisierungssystems und insbesondere der Steuerungsanlage Einfluss auf das Bedien-Interface für Programme oder Applikationen in der Cloud-Umgebung oder auf dem Edge-Gerät genommen werden.

Gemäß einer Ausgestaltung wird als Bedieninterface-Designtool ein Tool eines Hardware-Bedien-Interfaces der Hardware-Komponente festgelegt. Beispielsweise wird ein Programm wie WinCC mit einer zugehörigen Bibliothek von Bedienelementen verwendet. Dadurch wird die Erstellung des Bedieninterfaces der Cloud- oder Edge-Applikation vorteilhaft mit den Mitteln der Erstellung von Bedieninterfaces für Mensch-Maschine-Schnittstellen ermöglicht, welche Anlagenbauern oder Anlagenbetreibern wiederum vorteilhafterweise bekannt sind.

Gemäß einer Ausgestaltung werden mittels der Gerätekonfiguration für die Cloud-Umgebung und/oder das Edge-Gerät eine Gerätedimensionierung, insbesondere eine Speicherplatzdimensionierung oder Eingänge und/oder Ausgänge oder Kommunikationsschnittstellen festgelegt. Ähnlich der Gerätekonfiguration der Hardware-Komponente wird so die Gerätekonfiguration für die Cloud-Umgebung oder das Edge-Gerät projektiert. Auch die Cloud-Umgebung und das Edge-Gerät weisen Eigenschaften auf, welche in der Projektstruktur als Geräteeigenschaften erfasst werden können. Auf vorteilhafte Weise kann innerhalb der Projektierungsumgebung und mit den Mitteln der Projektierung des Automatisierungssystems die Durchführung der Automatisierungsaufgabe auf der Cloud-Umgebung oder mittels des Edge-Gerätes auf deren Gerätekonfiguration hin zugeschnitten werden. Beispielsweise werden dafür Adressen angepasst oder es wird ein passender Messbereich gewählt.

Gemäß einer Ausgestaltung wird für die Cloud-Umgebung oder das Edge-Gerät ferner eine Liste globaler Symbole festgelegt. Über eine Liste oder Sammlung oder einen Vorrat globaler Symbole wird anschaulich gesprochen festgelegt, welche Größen für ein Gerät relevant sind. Die Liste globaler Symbole ist diejenige Datenstruktur, welche auch von Übersetzungsprogrammen wie einem Compiler oder einem Interpreter verwendet wird und die einem Symbol in einem Quellcode Angaben und damit eine Bedeutung zuordnet. Beispielsweise beschreibt ein Symbol einen sogenannten Operanden, beispielsweise einen Eingang oder einen Ausgang, und es wird innerhalb der Programmierung ein symbolischer Name für diesen Operanden vergeben. Die symbolischen Namen werden dann in der Liste globaler Symbole beispielsweise mit dem zugehörigen Datentyp hinterlegt. Aus dem Engineeringumfeld in der Automatisierung ist als eine solche Liste globaler Symbole eine Symboltabelle oder Taglist bekannt. Die Symboltabelle ist somit auf vorteilhafte Weise ebenfalls Bestandteil der zur Cloud-Umgebung oder zum Edge-Gerät zugehörigen Projekt-Bestandteile neben dem Programmbaustein, der Gerätekonfiguration und dem Bedieninterface.

Gemäß einer Ausgestaltung umfasst die Liste globaler Symbole Symbole, die Variablen der Cloud-Umgebung oder des Edge-Gerätes darstellen. Beispielsweise betreffen die Symbole Signale, die mit der Cloud-Umgebung oder dem Edge-Gerät ausgetauscht werden und in einem Programm oder einer Applikation der Cloud-Umgebung oder des Edge-Gerätes verwendet werden.

Gemäß einer Ausgestaltung umfasst die Liste globaler Symbole ferner Symbole, die Variablen der mindestens einen Hardware-Komponente darstellen. Auf besonders vorteilhafte Weise wird im Automatisierungsprojekt und in der Cloud-Anwendung die gleiche Symboltabelle genutzt. Diese ist um Symbole betreffend die Cloud-Umgebung oder das Edge-Gerät erweitert. Somit kann eine einheitliche oder konsistente Symboltabelle im Steuerungssystem des Automatisierungssystems und auch in einer Applikation der Cloud-Umgebung oder des Edge-Gerätes ausgewertet werden. Auf vorteilhafte Weise besteht ein direkter Zugriff auf Zustandsinformationen des Automatisierungsprojektes, ohne eine Übersetzung der im Automatisierungsprojekt verwendeten oder beschriebenen Größen auf die Sprache oder Semantik der Cloud-Umgebung oder des Edge-Gerätes vornehmen zu müssen.

Die Variablen innerhalb der Symbolliste können dabei Programm-Variablen oder Bedien-Interface-Variablen beschreiben. Diese können lediglich die Cloud-Umgebung oder das Edge-Gerät betreffen oder zusätzlich auch Programmvariablen oder Bedien-Interface-Variablen der Hardware-Komponente sein. Klassische Variablen einer Symbolliste, welche die Hardware-Komponente betreffen, sind beispielsweise sogenannte PLC-Variablen, Namen für Sensoren oder Aktoren, insbesondere symbolische Namen, oder Variablen für eine Kommunikation, beispielsweise eine Kommunikation mit einem Roboter innerhalb des Automatisierungssystems oder außerhalb des Automatisierungssystems.

Gemäß einer Ausgestaltung wird als Hardware-Komponente eine Steuerungseinheit oder eine Mensch-Maschine-Schnittstelleneinheit für eine Steuerungseinheit vorgesehen. In der Regel ist zumindest eine Steuerungseinheit in einem Automatisierungssystem vorgesehen, welche zum Durchführen der Automatisierungsaufgabe innerhalb des Automatisierungssystems, d. h. in der Anlage selbst, vorgesehen ist. Insbesondere werden nur Teile der Automatisierungsaufgabe durch die Steuerungseinheit realisiert. Eine weitere klassische Hardware-Komponente innerhalb eines Automatisierungssystems ist eine Mensch-Maschinen-Schnittstelleneinheit oder ein sogenanntes Human Machine Interface, kurz HMI. Mit diesem werden Informationen betreffend das Automatisierungssystem derart dargestellt oder zugänglich gemacht, dass ein Nutzer, d. h. ein Mensch, die Informationen auswerten kann und ggf. ebenfalls mittels der Mensch-Maschinen-Schnittstelleneinheit entsprechende Vorgaben eingeben kann.

Eine Steuerungseinheit oder eine Mensch-Maschinen-Schnittstelleneinheit sind in gängigen Automatisierungssystemen Teil der Projektstruktur und insbesondere bereits projektiert. Die Integration der Cloud-Umgebung oder des Edge-Gerätes kann sich entsprechend an die Projektierung einer Steuerungseinheit oder einer Mensch-Maschine-Schnittstelleneinheit anpassen.

Gemäß einer Ausgestaltung werden als Projektbestandteile der Hardware-Komponente ein Hardware-Programmbaustein, ein Hardware-Bedieninterface, eine Hardware-Konfiguration und/oder ein oder mehrere Hardware-Symbole festgelegt.

Auf vorteilhafte Weise sind die zugehörigen Projektbestandteile der Cloud-Umgebung und des Edge-Gerätes in einer analogen Hierarchie und Struktur zu den Projektbestandteilen der Hardware-Komponente, wie dem Programmbaustein der Hardware, dem Bedieninterface der Hardware und der Gerätekonfiguration der Hardware ausgebildet.

Gemäß einer Ausgestaltung wird mittels des Hardware-Programmbausteins eine Algorithmik für eine Signalverarbeitung in der Hardware-Komponente festgelegt und insbesondere eine Programmiersprache für Programme der Hardware-Komponente festgelegt. Auf besonders vorteilhafte Weise wird für die Erstellung des-Programmbausteins der Cloud-Umgebung oder des Edge-Gerätes die gleiche Algorithmik verwendet wie für die des Hardware-Programmbausteines. Das Erstellen umfasst dabei ein Programmieren, Testen, Debuggen, Optimieren, Compilieren oder Laden in eine Zielumgebung. Ebenfalls wird auf vorteilhafte Weise eine einheitliche Programmiersprache verwendet. Ein Hardware-Bedien-Interface wird beispielsweise mit einer gängigen HMI-Projektierung im Engineering System vorgenommen, wobei insbesondere eine Bibliothek von Bedienelementen vorgesehen ist, welche genutzt werden kann, um eine bestimmte Darstellung oder Erscheinung von Informationen beispielsweise auf einem Bedien-Panel des Automatisierungssystems zu bewirken. Beispielsweise wird die Darstellung von Grenzwertüberschreitungen mithilfe von Leuchtanzeigen der aktivierten Buttons oder ähnlichem angezeigt. Eine analoge Vorgehensweise zur Darstellung oder zur Erscheinungsform von Informationen innerhalb einer Anwendung in der Cloud-Umgebung oder auf dem Edge-Gerät ist vorteilhaft auf besonders einfache Weise möglich, wenn das Bedien-Interface der Cloud-Umgebung oder des Edge-Gerätes auf die gleiche Weise festgelegt wird wie die der Hardware-Komponente. Beispielsweise wird als Tool für die Programmierung des Bedien-Interfaces der gleiche User Interface Architekt verwendet.

Die Erfindung betrifft ferner ein Engineering-System zur Projektierung eines Automatisierungssystems, wobei das Engineering-System dazu ausgebildet ist:
- eine Cloud-Umgebung und/oder ein Edge-Geräte mit Verbindungsmöglichkeit zu einer Cloud-Umgebung in eine Projektstruktur einer Projektierungsumgebung zu integrieren, wobei die Projektstruktur Komponenten aufweist und zumindest eine Hardware-Komponente mit Projektbestandteilen aufweist, wobei das Integrieren ein Hinterlegen und Anzeigen der Cloud-Umgebung und/oder des Edge-Gerätes als Komponente strukturiert gemäß einer technologischen Hierarchie umfasst,
- zur Cloud-Umgebung und/oder zum Edge-Gerät zugehörige Projektbestandteile zu definieren,
   wobei zumindest ein Programmbaustein und eine Gerätekonfiguration für die Cloud-Umgebung und/oder das Edge-Gerät festlegbar sind,
   wobei die Hardware-Komponente und die Cloud-Umgebung und/oder das Edge-Gerät mittels der Projektierung im Engineeringsystem zur Ausführung einer teilweise in der Cloud-Umgebung (10) und/oder im Edge-Gerät durchzuführenden Automatisierungsaufgabe des Automatisierungssystems ausgebildet sind.

Gemäß einer Ausgestaltung sind als zugehörige Projektbestandteile ferner ein Bedieninterface und/oder eine Liste globaler Symbole definierbar.

Gemäß einer Ausgestaltung ist das Engineeringsystem ferner ausgebildet eine Projektierung gemäß einem der oben beschriebenen Ausführungsformen auszuführen.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie beispielsweise ein Computerprogrammmittel, kann beispielsweise als Speichermedium, wie z. B. Speicherkarte, USB-Stick, CD-Rom, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei mit dem Computerprogrammprodukt oder dem Computerprogrammmittel erfolgen. Als programmgesteuerte Einrichtung kommt insbesondere eine Steuereinrichtung, beispielsweise auch ein Mikroprozessor oder dergleichen infrage.

Die Erfindung wird nachfolgend anhand von Ausführungsbeispielen der Figuren näher erläutert. Es zeigen:
- Figur 1: Eine schematische Darstellung eines Automatisierungssystems mit einem Edge-Gerät und einer Cloud-Umgebung;
- Figur 2: Eine schematische Darstellung einer Projekt-Struktur eines Automatisierungssystems gemäß einem Ausführungsbeispiel der Erfindung.

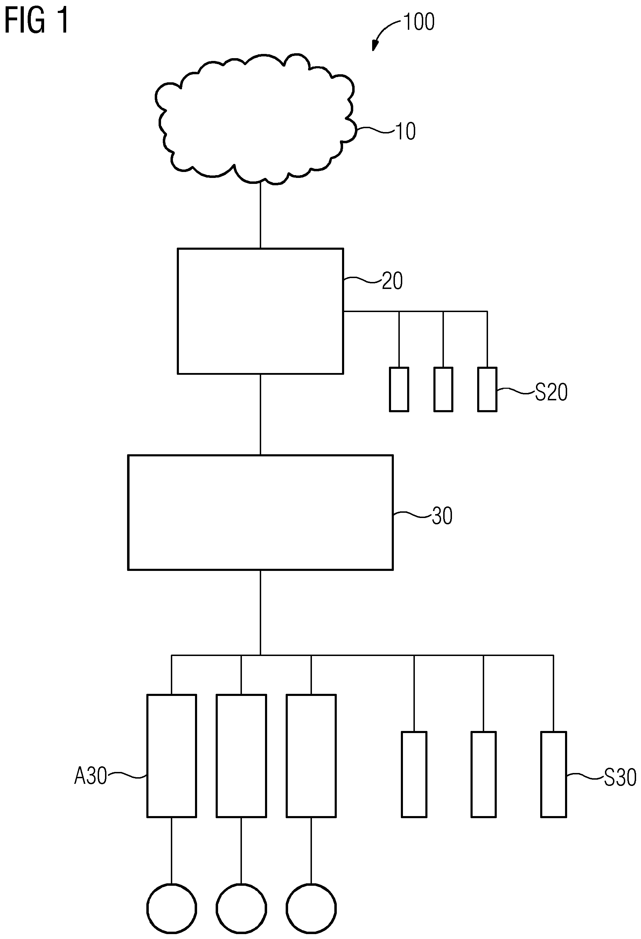

Zur Veranschaulichung der Projektierung eines Automatisierungssystems 100 ist in Figur 1 die Architektur des Automatisierungssystems 100 schematisch dargestellt. Als Kernstück enthält das Automatisierungssystem 100 eine Hardwarekomponente 30, welche als Steuerung ausgebildet ist. Die Steuerung 30 ist beispielsweise eine PLC und steuert einen Automatisierungsprozess wie beispielsweise einen Befüllvorgang innerhalb einer Abfüllanlage. Dazu weist die Steuerung 30 Sensorik S30 auf, wie beispielsweise Temperatursensoren, Encoder oder Vibrationssensoren oder ähnliches. Zudem umfasst die Steuerung 30 eine Aktorik A30, welche insbesondere aus Umrichtern und Motoren besteht, wobei die Motoren eine oder mehrere Achsen bewegen. In der Architektur bildlich dargestellt oberhalb von der Steuerung 30 befindet sich eine Cloud-Umgebung 10. Innerhalb dieser Cloud-Umgebung 10 oder Cloud 10 können Teilaufgaben des gesamten Automatisierungssystems 100 ausgelagert durchgeführt werden. Beispielsweise findet in der Cloud 10 eine Auswertung von Daten aus der Sensorik S30 statt. Beispielsweise ist es mittels der Cloud 10 möglich, in der Anlage des Automatisierungssystems 100 erfasste Daten durch Vergleich mit einer großen Anzahl von Daten aus anderen Automatisierungsanlagen auswerten zu lassen. Oftmals ist zu Zwecken der Vorbearbeitung von in der Automatisierungsanlage erfassten Daten ein sogenanntes Edge-Gerät 20 vorgesehen. Dieses Edge-Gerät 20 bildet zugleich eine Schnittstelle in die Cloud-Umgebung 10. Beispielsweise bearbeitet es die Daten, indem eine Filterung stattfindet und nur bestimmte Daten weiter in die Cloud-Umgebung geschickt werden. Beispielsweise weist das Edge-Gerät 20 weitere Sensorik S20 auf. Beispielsweise kommunizieren Bluetooth-Sensoren direkt mit dem Edge-Gerät 20. Somit belastet die Überwachung einer Anlage mit Sensoren in Hinblick auf Verschleiß oder Optimierung o.ä. die Automatisierung selbst nicht, weil eine Kommunikation über separaten Weg direkt an das Edge-Gerät erfolgt.

Herkömmlicherweise sind die erforderlichen Kompetenzen zur Einrichtung oder Projektierung im Wesentlichen hardwarespezifische Lösungen wie beispielsweise Drive Control Chart, kurz DCC, für die Aktor-Ebene, Lösungen und Kenntnisse rund um das sogenannte Engineering von Steuerungsanlagen auf der Steuerungs-Ebene, beispielsweise das TIA-Portal der Firma Siemens und dessen Steuerungsprogrammen mit Sprachen wie SCL (Structured Control Language) oder ST (Structured Text), und schließlich Lösungen, welche aus dem IT-Umfeld stammen, für die Cloud-Ebene oder die Edge- sowie die Cloud-Ebene.

Beispielsweise ist für die Programmierung eines Edge-Gerätes herkömmlicherweise Kenntnis von Programmiersprachen wie C oder C# oder C++ nötig, beispielsweise bei Realisierungen eines Edge-Gerätes in einer Linux-Umgebung. Auch für die Projektierung der Cloud, bzw. von Web-Applikationen, welche ein Nutzer eines Cloud-Dienstes selbst vorgeben möchte, sind oftmals Kompetenzen in der Web-Applikationsprogrammierung, beispielsweise mittels der Sprachen Visual Code oder Visual Studio oder Java von Nöten. Dabei liegt der Kompetenzschwerpunkt bei Anlagenbetreibern oftmals auf dem anspruchsvollen Gebiet der Projektierung von Steuerung und von Aktorik.

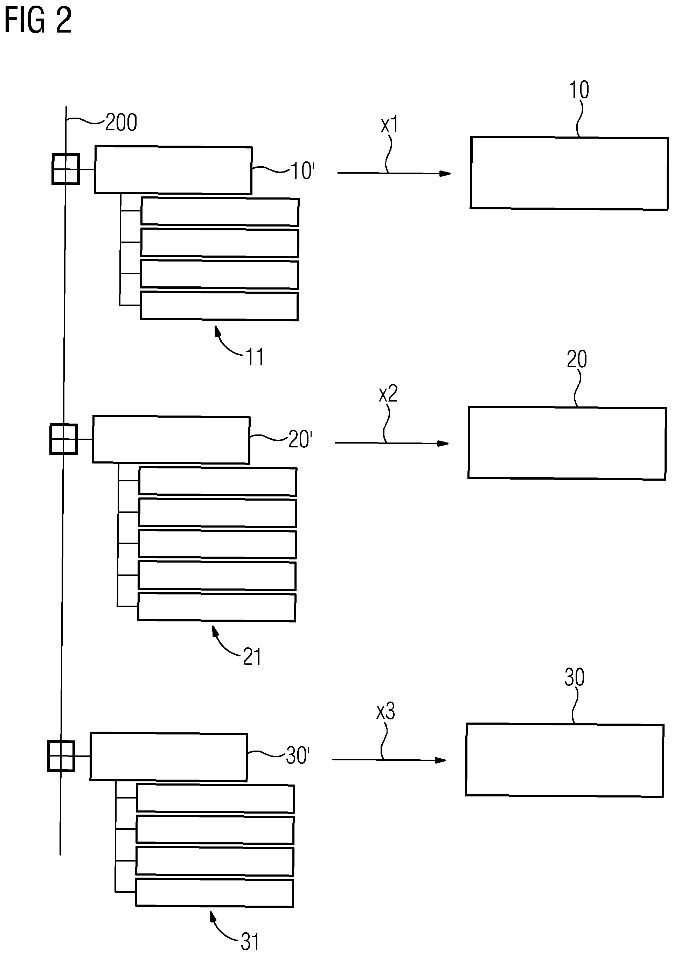

Figur 2 zeigt schematisch und angelehnt an die Architektur, wie sie in Figur 1 dargestellt wurde, die Komponenten der Cloud-Umgebung 10, des Edge-Gerätes 20, sowie der Hardware-komponente 30 in Form einer Steuerung in einer Projektierungsumgebung. Es ist dargestellt, wie die realen Komponenten Cloud-Umgebung 10, Edge-Gerät 20 und Steuerung 30, wie sie Teil des Automatisierungssystems 100 sind, in einer Projektstruktur 200 abgebildet werden. Dabei umfasst die Projektstruktur 200 einen Projektbaum mit einzelnen Komponenten 10', 20', 30' und einer unter der jeweiligen Komponente angeordneten Substrukur.

Eine Komponente 30' bildet beispielsweise die Steuerung 30 in der Projektstruktur 200 ab. In einer Projektierungsumgebung werden Merkmale der Steuerung 30 mit einer zugehörigen Einordnung in die Projektstruktur 200 hinterlegt oder gespeichert und sind über eine Nutzerschnittstelle der Projektierungsumgebung in der Projektstruktur 200 darstellbar. Projektbestandteile 31 der Steuerung 30 sind als Substruktur zur Komponente 30' darstellbar.

Auf vorteilhafte Weise wird die Projektstruktur 200 mit dem vorgeschlagenen Projektierungsverfahren erweitert. Neben Hardwarekomponenten, welche im herkömmlichen Automatisierungsumfeld bereits über eine Projektierungsumgebung engineered werden, sollen nun auch Komponenten, welche eine Cloud-Umgebung 10 direkt oder ein Edge-Gerät 20, welches die Verbindung der Cloud-Umgebung 10 darstellt, repräsentieren, in die Projektstruktur 200 integriert werden. Dazu wird eine Komponente 10' zur Repräsentation der Cloud-Umgebung 10 in der Projektierungsumgebung vorgeschlagen. Im Falle eines Edge-Gerätes 20, welches in der Automatisierungsanlage vorgesehen ist, wird dieses entweder alternativ zur Cloud-Umgebung 10 oder zusätzlich zur Cloud-Umgebung 10 berücksichtigt, indem eine Komponente 20' die Repräsentation des Edge-Gerätes 20 in der Projektierungsumgebung bildet. Sowohl die Komponente 10', welche die Cloud-Umgebung 10 abbildet, als auch die Komponente 20', welche, sofern vorhanden, dass Edge-Gerät 20 abbildet, weisen jeweils in der üblichen und vom herkömmlichen Automatisierungsprojekt bekannten Format eine Struktur auf, bei der die zugehörigen Projektbestandteile 11, 21 als Unterstruktur zur jeweiligen Komponente 10', 20' in der Projektierungsumgebung hinterlegt sind und darstellbar sind.

Die Projektierungsumgebung mit der festlegbaren Projektstruktur 200 bildet die Basis für die Projektierung des Automatisierungssystems 100, welches auch Aufgaben umfasst oder durchführen kann, welche in einer Cloud bearbeiten werden. In einer einheitlichen Weise und in der gewohnten Umgebung der Projektierung der Steuerung und insbesondere weiterer Hardwarekomponenten des Automatisierungssystems kann somit zusätzlich die Projektierung von Cloud-Komponenten, insbesondere einer Cloud-Umgebung 10 oder eines Edge-Gerätes 20, erfolgen. Insbesondere erfolgen auf diese Weise die Erstellung oder Entwicklung von Applikationen, welche in der Cloud angewendet werden. Beispielsweise ist über die Projektierungsumgebung eine Applikation vorgebbar, welche auf einem User Interface der Cloud-Umgebung 10 dargestellt wird und beispielsweise dazu dient, Dienste des Cloud-Services zu nutzen oder anzupassen.

Auf besonders vorteilhafte Weise erfolgt das Entwickeln der Projektbestandteile in der Projektierungsumgebung mit den Mitteln oder Sprachen der herkömmlichen Steuerungsprojektierung. Beispielsweise wird das TIA-Portal der Firma Siemens genutzt. Auch andere Engineering-Plattformen sind hierfür vorteilhaft einsetzbar. Beispielsweise werden Programmiersprachen wie SCL oder objektorientierte Sprachen wie OOP (Object Oriented Programming) genutzt, um Algorithmen zu erstellen, welche in der Cloud-Umgebung 10 ausgeführt werden. Auch ein User Interface einer Applikation in der Cloud-Umgebung 10 ist mit den gleichen Mitteln erstellbar, mit welchen herkömmlicherweise das HMI, das heißt die Mensch-Maschine-Schnittstelle der Steuerung, projektiert wird. Beispielsweise kann WinCC genutzt werden.

In Fällen, in welchen ein Edge-Gerät 20 vorgesehen ist, kann dessen Hardware, beispielsweise zu dem Edge-Gerät 20 zugehörige Sensorik, entsprechend der herkömmlichen Hardware des Automatisierungssystems 100 konfiguriert werden. Ebenso kann eine virtuelle Hardware, beispielsweise die virtuelle Hardware der Cloud-Umgebung 10, in bekannter Art erfolgen.

In der Projektstruktur der herkömmlichen Automatisierungsengineering-Software wird die Cloud-Umgebung 10, bzw. das Edge-Gerät 20 quasi als neues Gerät 20', beziehungsweise virtuelles Gerät 10' verwendet. Programme und Bedienoberflächen können für Cloud-Anwendungen oder Cloud-Applikationen, bzw. Edge-Anwendungen oder Edge-Applikationen entwickelt und abgelegt werden, wobei auf vorteilhafte Weise auf vorhandenes Wissen in der Steuerungstechnik zurückgegriffen werden kann.

Die in der Projektierungsumgebung erstellen Programme oder Applikationen und Bedienmasken oder Bedienoberflächen werden schließlich für die unterschiedlichen Plattformen, die das Automatisierungssystem aufweist, übersetzt. Beispielsweise werden Applikationen, welche für die Cloud-Umgebung 10, beispielsweise das System Mindssphere der Firma Siemens, entwickelt wurden, mittels eines Compilers x1 oder Cross Compilers übersetzt. Eine "PLC-Sprache" welche zur Generierung der Apps verwendet wurde, wird so beispielsweise in kompilierten Code umgewandelt oder in interpretierbaren Code wie beispielsweise Java, sofern entsprechende Runtime-Umgebungen auf der Zielplattform zur Verfügung stehen. Analog dazu erfolgt die Kompilierung von Programmcode, welcher für Anwendungen auf dem Edge-Gerät 20 erstellt wurde, mit einem Compiler x2. Hier wird ebenfalls beispielsweise in einen Edge-Code 20 kompiliert oder ein vom Edge-Gerät 20 interpretierbarer Code verwendet. Die Übersetzung der Programme und Bedienmasken, welche für die Steuerung 30 generiert wurden, erfolgt auf herkömmliche Weise, beispielsweise für eine Steuerung der Firma Siemens mittels eines Standardcompilers x3, welcher in einem sogenannten S7-Code kompiliert. Somit kann auf die Laufzeitumgebungen der verwendeten Zielsysteme, beispielsweise deren Hardware und Betriebssystem, Rücksicht genommen werden.

Die Verwendung einer Engineering Software für Automatisierungsgeräte zur Erstellung von Applikationen für Cloud-Lösungen schließt Methoden und Funktionen zum Testen und Debuggen ein, beispielsweise mittels Funktionen wie sogenannten Watchtables, Breakpoints, Traces oder Onlineverbindungen zum Zielsystem zum Laden und zur Laufzeit.

Als Basisprojektbestandteile werden für das Abbild 10' der Cloud-Umgebung 10 oder das Abbild 20' des Edge-Gerätes 20 jeweils zumindest ein Programmbausteinund eine Gerätekonfiguration festgelegt. Für das Abbild 10' der Cloud-Umgebung 10 ist zusätzlich ein Bedieninterface festgelegt. Ist in dem Automatisierungssystem ein Edge-Gerät 20 vorgesehen, so erfolgt vorteilhafterweise das Definieren der Projektbestandteile 11, 21 sowohl für die Komponente Edge-Gerät 20' als auch für die Komponente Cloud-Umgebung 10' als virtuelles Gerät in der Projektstruktur. Der jeweilige Programmbaustein ermöglicht das Einrichten von Programmen oder Algorithmen, welche den Funktionsumfang einer Cloud-Applikation festlegen. Beispielsweise wird mit dem mittels des Programmbausteines programmierten Algorithmus eine Anwendung generiert, welche eine spezifisch auf das Automatisierungssystem zugeschnittene Datenauswertung in der Cloud-Umgebung 10 oder anteilig in der Cloud-Umgebung 10 und auf dem Edge-Gerät 20 bewirkt. Der Algorithmus in dem Programmbaustein ist vorteilhafterweise in der Sprache der Steuerung hinterlegt oder wird in einer Engineering Phase in dieser Sprache erstellt.

Als Bedieninterface oder User Interface wird in dem Programmbestandteilen vorteilhafterweise das gleiche Bedieninterfacetool festgelegt, welches auch für die Steuerung verwendet wird. Beispielsweise wird so die HMI-Projektierung der Steuerung und deren Logik und Sprache auch dazu verwendet, die Nutzerschnittstelle der Cloud oder Edge-Applikationen zu generieren.

Schließlich wird als Basisbestandteil der zur Cloud-Umgebung 10 oder zum Edge-Gerät 20 zugehörigen Projektierungsmerkmale ferner eine Gerätekonfiguration festgelegt. In Analogie zur Gerätekonfiguration, welche in der Automatisierungsengineering-Software für die Hardwarekomponente 30 erstellt wird, wird auch eine quasi virtuelle Hardwarekonfiguration für die Cloud-Umgebung 10 oder das Edge-Gerät 20 generiert. Vorteilhafterweise werden die Hardwareeigenschaften der Cloud-Umgebung 10 oder des Edge-Gerätes 20 in der Projektstruktur 200 hinterlegt. Dabei wird insbesondere eine Gerätedimensionierung oder Speicherplatzdimensionierung eingerichtet. Ferner können auch Ein/Ausgänge oder Kommunikationsschnittstellen des Edge-Gerätes 20 vorteilhaft festgelegt werden.

Auf vorteilhafte Weise wird eine Symbolliste oder Symboltabelle oder Taglist in den verschiedenen Komponenten einheitlich verwendet. Das heißt, dass beispielsweise Variablen, welche über die Symbolliste der Steuerung im Kontext des Steuerungsgerätes erstellt oder definiert wurden, auch in den Projektbestandteilen der Komponente 10' als Repräsentation der Cloud-Umgebung 10 in der Programmierumgebung mit gleicher Bedeutung verwendet werden. Eine Symboltabelle kann somit auf vorteilhafte Weise für Auswertungen im Steuerungssystem sowie in der Cloud-Applikation verwendet werden. Insbesondere wird die zur Cloud-Umgebung 10 zugehörige Symboltabelle um spezifische Variablen der Cloud-Umgebung erweitert. Ein direkter Zugriff auf Zustandsinformationen des Automatisierungsprojektes ist somit auf vorteilhafte Weise innerhalb der Cloud-Applikation möglich.

Als weiterer Vorteil ist eine Datendurchgängigkeit insbesondere vertikal verbessert möglich. Insbesondere ist die Semantik der Symbole bei konsistenten Symboltabellen leichter handhabbar.

Ebenso kann auch die Symboltabelle der Komponente 20', welche das Edge-Gerät in der Projektstruktur abbildet, mit der Symboltabelle der Steuerung 30 übereinstimmen oder übereinstimmende Symbole oder Variablen aufweisen. Somit lassen sich analog zu den Ausführungen zur Symbolleiste der Cloud-Umgebung 10 die gleichen Vorteile für Anwendungen, welche auf dem Edge-Gerät 20 laufen, erzielen.

Im Automatisierungssystem, in welchem ein Edge-Gerät vorgesehen ist, ist auf vorteilhafte Weise sowohl das Edge-Gerät 20 als auch die Cloud-Umgebung 10 als Komponente 20', 10' mit dem zugehörigen Projektbestandteilen in der Projektstruktur 200 abbildbar. Die Cloud-Umgebung 10 wird dann quasi als virtuelles Gerät abgebildet.

Die vorgeschlagene Erfindung ermöglicht die Einbeziehung einer Cloud-Umgebung und gegebenenfalls zusätzlich eines Edge-Gerätes in ein Automatisierungsprojekt zu Zwecken der Projektierung von Anwendungen, welche im Betrieb des Automatisierungssystems in der Cloud-Umgebung oder in der Cloud-Umgebung und auf dem Edge-Gerät ausgeführt werden. Dabei werden besonders vorteilhafterweise Algorithmen sowie Benutzerschnittstellen der Cloud oder Edge-Anwendungen mit den gleichen Methoden und dem gleichen Erscheinungsbild oder der gleichen Usability wie bei der Projektierung oder dem Engineering einer gewöhnlichen Hardwarekomponente des Automatisierungssystems wie insbesondere einer PLC ermöglicht. Steuerungsspezifisches Wissen eines Anlagenbetreibers ist somit auch für Applikationen in einer Cloud, insbesondere für deren Generierung oder Einrichtung, einsetzbar.

## Patentansprüche

1. Computerimplementiertes Verfahren zur Projektierung eines Automatisierungssystems (100), aufweisend folgende Verfahrensschritte:
- Integrieren einer Cloud-Umgebung (10) und/oder eines Edge-Gerätes (20) mit Verbindungsmöglichkeit zu der Cloud-Umgebung (10) in eine Projektstruktur (200) einer Projektierungsumgebung des Automatisierungssystems,
wobei die Projektstruktur (200) Komponenten (10', 20', 30') aufweist und mindestens eine Hardware-Komponente (30) mit Projektbestandteilen (31) aufweist,
wobei das Integrieren ein Hinterlegen und Anzeigen der Cloud-Umgebung (10) oder des Edge-Gerätes (20) als Komponente (10', 20') strukturiert gemäß einer technologischen Hierarchie umfasst,
- Definieren von zur Cloud-Umgebung (10) und/oder zum Edge-Gerät (20) zugehörigen Projektbestandteilen (11, 21),
wobei zumindest ein Programmbaustein und eine Gerätekonfiguration für die Cloud-Umgebung oder das Edge-Gerät festgelegt werden,
wobei die Cloud-Umgebung und/ oder das Edge-Gerät mit zugehörigen Projektbestandteilen (11, 21) analog zur Integration der Hardware-Komponente (30) mit deren Projektbestandteilen (31) in die Projektstruktur (200) integriert wird,
wobei die Hardware-Komponente (30) und die Cloud-Umgebung (10) und/oder das Edge-Gerät (20) mittels der Projektierung zur Ausführung einer teilweise in der Cloud-Umgebung (10) und/oder im Edge-Gerät (20) durchzuführenden Automatisierungsaufgabe des Automatisierungssystems (100) ausgebildet sind.

2. Verfahren nach Anspruch 1, wobei mittels des mindestens einen Programmbausteins ein Betriebssystem für das Ausführen von Programmen oder Applikationen auf der Cloud-Umgebung und/oder dem Edge-Gerät oder eine Programmiersprache für das Programmieren von Programmen oder Applikationen für die Cloud-Umgebung (10) und/oder das Edge-Gerät (20) festgelegt werden.

3. Verfahren nach Anspruch 2, wobei als Programmiersprache für das Programmieren von Programmen oder Applikationen für die Cloud-Umgebung (10) und/oder das Edge-Gerät (20) eine Programmiersprache für Programme der Hardware-Komponente (30) festgelegt wird.

4. Verfahren nach einem der vorstehenden Ansprüche, wobei als zugehöriger Projektbestandteil ferner ein Bedieninterface festgelegt wird.

5. Verfahren nach Anspruch 4, wobei als Bedieninterface ein Bedieninterface-Designtool festgelegt wird, welches eine Bibliothek von Bedienelementen umfasst.

6. Verfahren nach Anspruch 5, wobei als Bedieninterface-Designtool ein Designtool eines Hardware-Bedieninterfaces der Hardware-Komponente (30) festgelegt wird.

7. Verfahren nach einem der vorstehenden Ansprüche,
wobei die Gerätekonfiguration für die Cloud-Umgebung (10) und/oder das Edge-Gerät (20) eine Gerätedimensionierung, insbesondere eine Speicherplatzdimensionierung, oder Eingänge und/oder Ausgänge oder Kommunikationsschnittstellen festlegt.

8. Verfahren nach einem der vorstehenden Ansprüche, wobei für die Cloud-Umgebung (10) oder das Edge-Gerät (20) ferner eine Liste globaler Symbole festgelegt wird.

9. Verfahren nach Anspruch 8, wobei die Liste globaler Symbole Symbole umfasst, welche Variablen der Cloud-Umgebung (10) oder des Edge-Gerätes (20) darstellen.

10. Verfahren nach Anspruch 8 oder 9, wobei die Liste globaler Symbole ferner Symbole umfasst, welche Variablen der mindestens einen Hardware-Komponente (30) darstellen.

11. Verfahren nach einem der vorstehenden Ansprüche, wobei als Hardware-Komponente (30) eine Steuerungseinheit oder eine Mensch-Maschinen-Schnittstelleneinheit für eine Steuerungseinheit vorgesehen wird.

12. Verfahren nach einem der vorstehenden Ansprüche, wobei als Projektbestandteile der Hardwarekomponente (30) ein Hardware-Programmbaustein, ein Hardware-Bedieninterface, eine Hardwarekonfiguration und/oder ein oder mehrere Hardwaresymbole festgelegt werden.

13. Verfahren nach Anspruch 12, wobei mittels des Hardware-Programmbausteines eine Algorithmik für eine Signalverarbeitung in der Hardware-Komponente (30) festgelegt wird und insbesondere eine Programmiersprache für Programme der Hardware-Komponente (30) festgelegt wird.

14. Engineeringsystem zur Projektierung eines Automatisierungssystems (100), wobei das Engineeringsystem dazu ausgebildet ist:
- eine Cloud-Umgebung (10) und/oder ein Edge-Gerät (20) mit Verbindungsmöglichkeit zu der Cloud-Umgebung (10) in eine Projektstruktur (100) einer Projektierungsumgebung zu integrieren,
wobei die Projektstruktur (200) Komponenten (10', 20', 30') aufweist und zumindest eine Hardware-Komponente (30) mit Projektbestandteilen (31) aufweist,
wobei das Integrieren ein Hinterlegen und Anzeigen der Cloud-Umgebung (10) und/oder des Edge-Gerätes (20) als Komponente strukturiert gemäß einer technologischen Hierarchie umfasst,
- zur Cloud-Umgebung (10) und/oder zum Edge-Gerät (20) zugehörige Projektbestandteile zu definieren,
wobei zumindest ein Programmbaustein und eine Gerätekonfiguration für die Cloud-Umgebung und/oder das Edge-Gerät festlegbar sind, wobei die Cloud-Umgebung und/ oder das Edge-Gerät mit zugehörigen Projektbestandteilen (11, 21) analog zur Integration der Hardware-Komponente (30) mit deren Projektbestandteilen (31) in die Projektstruktur (200) integrierbar sind,
wobei die Hardware-Komponente (30) und die Cloud-Umgebung (10) und/oder das Edge-Gerät (20) mittels der Projektierung im Engineeringssystem zur Ausführung einer teilweise in der Cloud-Umgebung (10) und/oder im Edge-Gerät (20) durchzuführenden Automatisierungsaufgabe des Automatisierungssystems (100) ausgebildet sind.

15. Engineeringsystem nach Anspruch 14, wobei als zugehörige Projektbestandteile ferner ein Bedieninterface und/oder eine Liste globaler Symbole definierbar sind.

16. Engineeringsystem nach Anspruch 14 oder 15, ferner ausgebildet eine Projektierung gemäß einem der Ansprüche 2 bis 13 auszuführen.

17. Computerprogrammprodukt mit einem Computerprogramm, das Mittel zur Durchführung des Verfahrens nach einem der Ansprüche 1 bis 13 aufweist, wenn das Computerprogramm auf einer programmgesteuerten Einrichtung zur Ausführung gebracht wird.

## Claims

1. Computer-implemented method for planning an automation system (100), having the following method steps:
- integrating a cloud environment (10) and/or an edge device (20) having the capability of connecting to the cloud environment (10) into a project structure (200) of a planning environment of the automation system,
wherein the project structure (200) has components (10', 20', 30') and has at least one hardware component (30) having project elements (31),
wherein the integrating comprises saving and displaying the cloud environment (10) or the edge device (20), in a manner structured as a component (10' 20'), according to a technological hierarchy,
- defining project elements (11, 21) associated with the cloud environment (10) and/or with the edge device (20), wherein at least one program block and a device configuration are stipulated for the cloud environment or the edge device,
wherein the cloud environment and/or the edge device with associated project elements (11, 21) is integrated into the project structure (200) analogously to the integration of the hardware component (30) with the project elements (31) thereof,
wherein the hardware component (30) and the cloud environment (10) and/or the edge device (20) are designed by means of the planning to perform an automation task of the automation system (100) that must in part be performed in the cloud environment (10) and/or in the edge device (20) .

2. Method according to Claim 1, wherein the at least one program block is used to stipulate an operating system for executing programs or applications on the cloud environment and/or on the edge device or a programming language for programming programs or applications for the cloud environment (10) and/or the edge device (20).

3. Method according to Claim 2, wherein the programming language stipulated for programming programs or applications for the cloud environment (10) and/or the edge device (20) is a programming language for programs of the hardware component (30).

4. Method according to one of the preceding claims, wherein the associated project element stipulated is further an operator control interface.

5. Method according to Claim 4, wherein the operator control interface stipulated is an operator control interface design tool that comprises a library of operator control elements.

6. Method according to Claim 5, wherein the operator control interface design tool stipulated is a design tool of a hardware operator control interface of the hardware component (30).

7. Method according to one of the preceding claims, wherein the device configuration for the cloud environment (10) and/or the edge device (20) stipulates a device dimensioning, in particular a memory space dimensioning, or inputs and/or outputs or communication interfaces.

8. Method according to one of the preceding claims, wherein, further, a list of global symbols is stipulated for the cloud environment (10) or the edge device (20).

9. Method according to Claim 8, wherein the list of global symbols comprises symbols representing variables of the cloud environment (10) or of the edge device (20).

10. Method according to Claim 8 or 9, wherein the list of global symbols further comprises symbols representing variables of the at least one hardware component (30).

11. Method according to one of the preceding claims, wherein the hardware component (30) provided for is a control unit or a human/machine interface unit for a control unit.

12. Method according to one of the preceding claims, wherein the project elements stipulated for the hardware component (30) are a hardware program block, a hardware operator control interface, a hardware configuration and/or one or more hardware symbols.

13. Method according to Claim 12, wherein the hardware program block is used to stipulate a set of algorithms for a signal processing in the hardware component (30) and in particular to stipulate a programming language for programs of the hardware component (30).

14. Engineering system for planning an automation system (100), wherein the engineering system is designed:
- to integrate a cloud environment (10) and/or an edge device (20) having the capability of connecting to the cloud environment (10) into a project structure (100) of a planning environment,
wherein the project structure (200) has components (10', 20', 30') and has at least one hardware component (30) having project elements (31),
wherein the integrating comprises saving and displaying the cloud environment (10) and/or the edge device (20), in a manner structured as a component, according to a technological hierarchy,
- to define project elements associated with the cloud environment (10) and/or with the edge device (20),
wherein at least one program block and a device configuration are stipulable for the cloud environment and/or the edge device, wherein the cloud environment and/or the edge device with associated project elements (11, 21) are integrable into the project structure (200) analogously to the integration of the hardware component (30) with the project elements (31) thereof,
wherein the hardware component (30) and the cloud environment (10) and/or the edge device (20) are designed by means of the planning in the engineering system to perform an automation task of the automation system (100) that must in part be performed in the cloud environment (10) and/or in the edge device (20).

15. Engineering system according to Claim 14, wherein the associated project elements definable are, further, an operator control interface and/or a list of global symbols.

16. Engineering system according to Claim 14 or 15, further designed to perform planning according to one of Claims 2 to 13.

17. Computer program product having a computer program that has means for performing the method according to one of Claims 1 to 13 when the computer program is executed on a program-controlled device.

## Revendications

1. Procédé implémenté par ordinateur pour la conception d'un système d'automatisation (100), comprenant les étapes de procédé suivantes :
- l'intégration d'un environnement cloud (10) et/ou d'un appareil edge (20) avec possibilité de connexion à l'environnement cloud (10) dans une structure de projet (200) d'un environnement de conception du système d'automatisation, dans lequel la structure de projet (200) comprend des composants (10', 20', 30') et comprend au moins un composant matériel (30) avec des éléments de projet (31),
dans lequel l'intégration comporte le stockage et l'affichage de l'environnement cloud (10) ou de l'appareil edge (20) en tant que composant (10', 20') structuré selon une hiérarchie technologique,
- la définition des éléments de projet (11, 21) associés à l'environnement cloud (10) et/ou à l'appareil edge (20),
dans lequel au moins un module de programme et une configuration de l'appareil sont définis pour l'environnement cloud ou l'appareil edge,
dans lequel l'environnement cloud et/ou l'appareil edge avec les composants de projet (11, 21) associés sont intégrés dans la structure de projet (200) de manière analogue à l'intégration du composant matériel (30) avec ses éléments de projet (31),
dans lequel le composant matériel (30) et l'environnement cloud (10) et/ou l'appareil edge (20) sont conçus, au moyen de la conception, pour exécuter une tâche d'automatisation du système d'automatisation (100) effectuée partiellement dans l'environnement cloud (10) et/ou dans l'appareil edge (20).

2. Procédé selon la revendication 1, dans lequel, au moyen de l'au moins un module de programme, un système d'exploitation pour exécuter des programmes ou des applications sur l'environnement cloud et/ou l'appareil edge ou un langage de programmation pour programmer des programmes ou des applications pour l'environnement cloud (10) et/ou l'appareil edge (20) sont définis.

3. Procédé selon la revendication 2, dans lequel un langage de programmation pour les programmes du composant matériel (30) est défini comme langage de programmation pour programmer des programmes ou des applications pour l'environnement cloud (10) et/ou l'appareil edge (20).

4. Procédé selon l'une des revendications précédentes, dans lequel une interface utilisateur est en outre définie en tant qu'élément de projet associé.

5. Procédé selon la revendication 4, dans lequel un outil de conception d'interface utilisateur qui comporte une bibliothèque d'éléments de commande est défini comme interface utilisateur.

6. Procédé selon la revendication 5, dans lequel un outil de conception d'une interface utilisateur matérielle du composant matériel (30) est défini en tant qu'outil de conception d'interface utilisateur.

7. Procédé selon l'une des revendications précédentes,
dans lequel la configuration de l'appareil pour l'environnement cloud (10) et/ou l'appareil edge (20) définit les dimensions de l'appareil, en particulier les dimensions de l'espace mémoire, ou les entrées et/ou les sorties ou les interfaces de communication.

8. Procédé selon l'une quelconque des revendications précédentes, dans lequel une liste d'icônes globales est en outre définie pour l'environnement cloud (10) ou l'appareil edge (20).

9. Procédé selon la revendication 8, dans lequel la liste d'icônes globales comporte des icônes représentant des variables de l'environnement cloud (10) ou de l'appareil edge (20) .

10. Procédé selon la revendication 8 ou 9, dans lequel la liste d'icônes globales comporte en outre des icônes représentant des variables de l'au moins un composant matériel (30).

11. Procédé selon l'une des revendications précédentes, dans lequel une unité de commande ou une unité d'interface homme-machine pour une unité de commande est prévue en tant que composant matériel (30).

12. Procédé selon l'une des revendications précédentes, dans lequel un module de programme matériel, une interface utilisateur matérielle, une configuration matérielle et/ou une ou plusieurs icônes matérielles sont définis comme éléments de projet du composant matériel (30).

13. Procédé selon la revendication 12, dans lequel un algorithme de traitement de signal dans le composant matériel (30) est défini au moyen du module de programme matériel et en particulier un langage de programmation est défini pour les programmes dans le composant matériel (30).

14. Système d'ingénierie pour concevoir un système d'automatisation (100), dans lequel le système d'ingénierie est conçu pour :
- intégrer un environnement cloud (10) et/ou un appareil edge (20) avec possibilité de connexion à l'environnement cloud (10) dans une structure de projet (100) d'un environnement de conception,
dans lequel la structure de projet (200) comprend des composants (10', 20', 30') et comprend au moins un composant matériel (30) avec des éléments de projet (31),
dans lequel l'intégration comporte le stockage et l'affichage de l'environnement cloud (10) et/ou de l'appareil edge (20) en tant que composant structuré selon une hiérarchie technologique,
- définir l'élément de projet associé à l'environnement cloud (10) et/ou à l'appareil edge (20),
dans lequel au moins un module de programme et une configuration de l'appareil peuvent être définis pour l'environnement cloud et/ou l'appareil edge, dans lequel l'environnement cloud et/ou l'appareil edge avec les composants de projet (11, 21) associés peuvent être intégrés dans la structure de projet (200) de manière analogue à l'intégration du composant matériel (30) avec ses éléments de projet (31),
dans lequel le composant matériel (30) et l'environnement cloud (10) et/ou l'appareil edge (20) sont conçus, au moyen de la conception dans le système d'ingénierie, pour exécuter une tâche d'automatisation du système d'automatisation (100) effectuée partiellement dans l'environnement cloud (10) et/ou dans l'appareil edge (20).

15. Système d'ingénierie selon la revendication 14, dans lequel une interface utilisateur et/ou une liste d'icônes globales peuvent en outre être définies en tant qu'éléments de projet associés.

16. Système d'ingénierie selon la revendication 14 ou 15, conçu en outre pour exécuter une configuration selon l'une des revendications 2 à 13.

17. Produit de programme informatique avec un programme informatique qui comprend un moyen pour exécuter le procédé selon l'une des revendications 1 à 13 lorsque le programme informatique est exécuté sur un dispositif commandé par programme.
